# EUROPEAN PATENT SPECIFICATION

(11) **EP 3 263 408 B1**
(45) Date of publication and mention of the grant of the patent: **09.10.2019**
(21) Application number: 16177009.4
(22) Date of filing: 29.06.2016
(51) Int. Cl.: B60R 21/2338, B60R 21/235, D03D 1/02

(54) **A VEHICLE AIR-BAG**
FAHRZEUGAIRBAG
AIRBAG DE VÉHICULE

(43) Date of publication of application: 03.01.2018
(73) Proprietor: Autoliv Development AB, 447 83 Vårgårda (SE)
(72) Inventor: WOOTTON, Gary, Stoke on Trent, Cheshire ST7 3PH (GB); FINN, Hugh, Warrington, Cheshire WA3 4LG (GB)
(74) Representative: Rusby-Gale, Daniel Matthew

(56) References cited:
- EP-A1- 2 520 471
- EP-A2- 1 080 997
- WO-A1-2007/100377
- WO-A1-2012/031643

## Description

### Description of Invention

This invention relates to a vehicle air-bag and more particularly a vehicle air-bag which incorporates an internal tether.

A vehicle air-bag typically comprises two layers of fabric which are each formed from interwoven warp and weft yarns. Air-bags are often manufactured using one piece weaving techniques since this can be done rapidly in a single operation on a weaving loom.

It is known to provide a tether between parts of an air-bag to restrict the expansion or movement of the air-bag when the air-bag is inflated. Tethers are often provided in a pedestrian protecting air-bag or a curtain air-bag to maintain the air-bag in an appropriate shape, upon inflation. The tethers extend across the internal chamber of the air-bag and are connected to the fabric layers of the air-bag to control the depth or the thickness of parts of the air-bag, upon inflation.

The tethers are formed from a plurality of tether yarns which are connected along short portions of the fabric of the air-bag. Unused lengths of the tether yarns are typically left to hang freely within the air-bag because it is difficult to cut and remove the unused lengths of tether yarns.

The unused lengths of tether yarns do not interfere with the inflation of the air-bag. However, the unused lengths of tether yarns extend across the internal chamber of the air-bag, making it difficult to insert reinforcing elements into the air-bag during manufacture. For instance, the unused lengths of tether yarns make it difficult to insert plastic or fabric reinforcements to reinforce a portion of the air-bag.

International publication no. WO2007/100377 discloses a conventional woven air-bag, according to the preamble of claim 1, with integrally woven tethers.

There is a need for an improved vehicle air-bag which alleviates at least the problems outlined above.

The present invention seeks to provide an improved vehicle air-bag. According to one aspect of the present invention, there is provided a vehicle air-bag as defined in claim 1 hereinafter.

According to another aspect of the present invention, there is provided a vehicle air-bag module comprising the vehicle air-bag as defined in any one of claims 1 to 9 hereinafter.

So that the present invention may be more readily understood, embodiments of the present invention will now be described, by way of example, with reference to the accompanying drawings, in which:
Figure 1 is a diagrammatic view of an air-bag showing a throat portion of the air-bag,
Figure 2 is a diagrammatic perspective view of a tether which is interwoven with warp yarns of an air-bag of an embodiment of the invention,
Figure 3 is a diagrammatic view of an air-bag of an embodiment of the invention, and
Figure 4 is a diagrammatic cross-sectional view of part of the air-bag shown in figure 3.

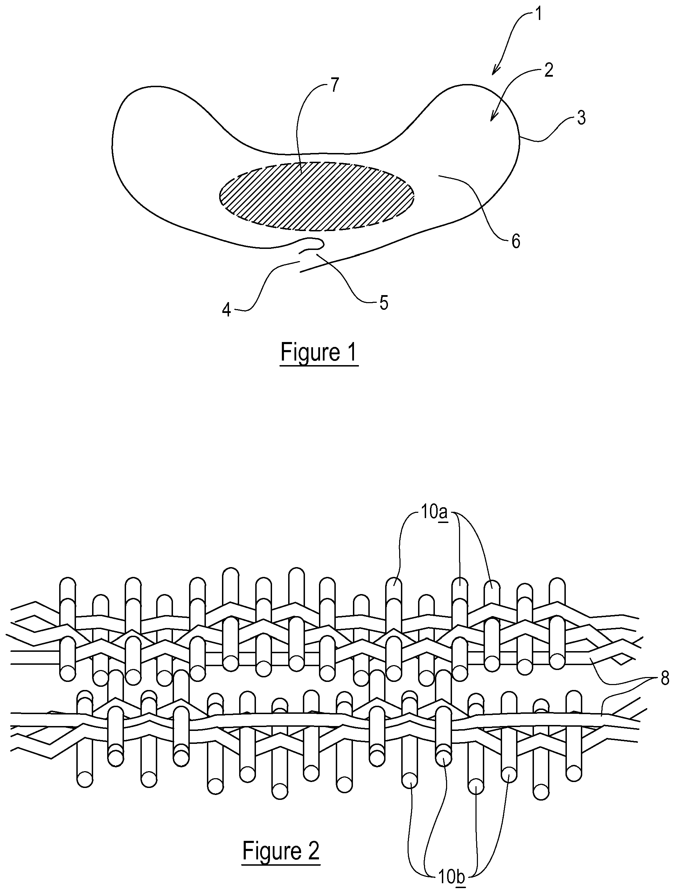

Referring initially to figure 1 of the accompanying drawings, an air-bag 1 comprises first and second layers of superimposed fabric 2, 3 (only one of which is visible in figure 1). The layers of fabric each comprise a plurality of interwoven warp and weft yarns. In this embodiment, the layers of fabric 2, 3 are manufactured using a one piece weaving technique.

In this embodiment, the air-bag 1 is a pedestrian protecting air-bag. However, in other embodiments, the air-bag 1 is a curtain or integrated curtain air-bag. It is to be appreciated that, in other embodiments of the invention, the air-bag 1 may be yet another type of air-bag.

The air-bag 1 comprises an inlet aperture 4 which is provided in at least one of the first and second layers of fabric 2, 3. In this embodiment, the inlet aperture 4 is formed between the two superimposed layers of fabric 2, 3. The inlet aperture 4 is configured to be connected to a source of gas (not shown), such as a pyrotechnic gas generator.

The inlet aperture 4 is provided at one end of an optional inlet conduit 5. The other end of the inlet conduit 5 is in fluid communication with a chamber 6 which is at least partly provided between the superimposed first and second layers of fabric 2, 3. The air-bag 1 is configured such that gas introduced into the inlet aperture 4 will flow into the chamber 6 to inflate the air-bag 1.

A throat portion 7 of the air-bag 1 is positioned at or adjacent to the inlet aperture 4. The throat portion 7 comprises portions of the first and second layers of fabric 2, 3 of the air-bag 1 that are subject to high forces and high temperatures from gas which is injected into the air-bag 1 when the air-bag 1 is inflated. In this embodiment, the throat portion 7 of the air-bag 1 comprises portions of the first and second layers of fabric 2, 3 which are acted on directly by gas injected into the air-bag during inflation.

In further embodiments, the air-bag 1 is reinforced at the throat portion 7 by a reinforcing element (not shown). The reinforcing element is mounted within the throat portion 7 to protect the throat portion 7 from the high temperature gases that are introduced into the air-bag upon inflation. The reinforcing element is, in one embodiment, a Y-sock which is of a plastic and/or fabric material. The reinforcing element is inserted into the chamber 6 of the air-bag 1 during manufacture. In embodiments where the air-bag 1 is a one piece woven air-bag, the reinforcing element is inserted into the chamber 6, through the inlet aperture 4, after the one piece weaving process is complete.

Referring now to figures 2 to 4 of the accompanying drawings, the air-bag 1 comprises an elongate tether 8 which, in this embodiment, comprises a plurality of tether yarns. For simplicity, the plurality of tether yarns will be referred to as "a tether" in the following description.

The tether 8 is connected between the first and second layers of fabric 2, 3 to restrict or modify the shape of the air-bag as the air-bag 1 is inflated. In this embodiment, the tether 8 is configured to control the thickness or depth of the air-bag 1 by restricting the expansion of portions of the chamber 6 as the air-bag 1 is inflated.

A first portion 9 of the tether 8 is interwoven with a plurality of warp yarns 10a in a first part 11 of the air-bag 1. In other embodiments, the first portion 9 of the tether 8 is interwoven with at least one warp yarn 10a in the first part 11 of the air-bag 1.

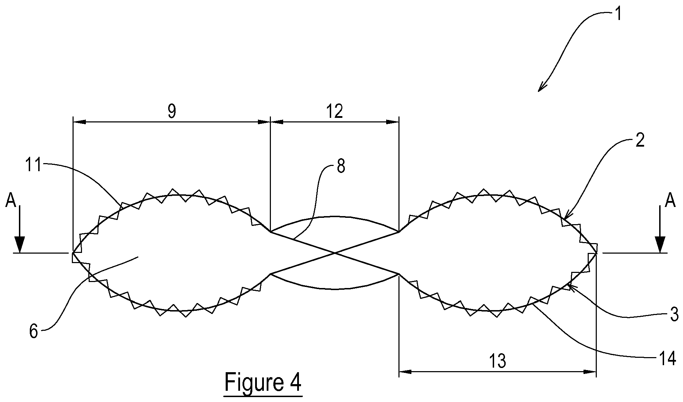

A second portion 12 of the tether 8 is not interwoven with any warp yarns of the air-bag 1. The second portion 12 of the tether 8 extends from the first layer of fabric 2 of the air-bag 1 to the second layer of fabric 3 of the air-bag 1, as shown in figure 4. The second portion 12 of the tether 8 functions as a tether which restricts or modifies the shape of the air-bag 1, upon inflation.

A third portion 13 of the tether 8 is interwoven with a plurality of warp yarns 10b of the second layer of fabric 3 of the air-bag 1 to attach the tether 8 to the second layer of fabric 3. In other embodiments, the third portion 13 of the tether 8 is interwoven with at least one warp yarn 10b in a second part 14 of the air-bag 1 to attach the tether 8 to the second fabric layer 3 of the air-bag 1.

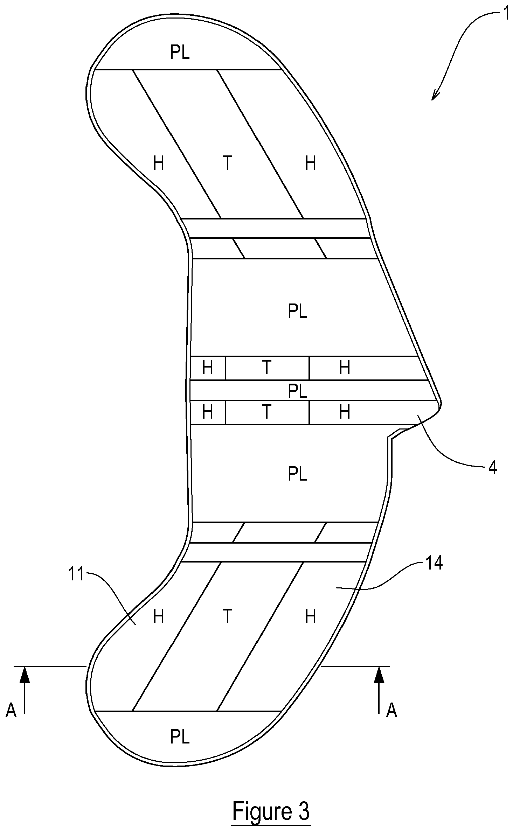

Referring now to figure 3 of the accompanying drawings, the first and third portions 9, 13 of the tether 8 are, in this embodiment, interwoven with warp yarns 10a, 10b in the layers of fabric 2, 3 such that the first and third portions 9, 13 are integrated into the layers of fabric 2, 3 of the air-bag 1. The first and third portions 9, 13 of the tether 8 are thus hidden, as indicated by the letter H in figure 3, and the first and third portions 9, 13 of the tether 8 do not hang freely within the chamber 6 of the air-bag 1. The second portion 12 of the tether 8 functions as a tether to control the shape of the air-bag 1 upon inflation and is indicated by the letter T in figure 3.

The air-bag 1, of this embodiment of the invention, comprises a plurality of tethers which are interwoven with a plurality of different parts of the fabric of the air-bag 1, as indicated by the letters H in figure 3. Parts of the air-bag 1 which do not comprise an interwoven portion of a tether and which do not have a portion of a tether extending across between the layers of fabric 2, 3 of the air-bag 1 are indicated with the letters PL in figure 3.

In this embodiment, the combined lengths of the first, second and third portions 9, 12 and 13 of the tether 8 are substantially equal to the entire length of the tether 8. The air-bag 1 does not comprise any unused portions of the tether 8 which hang freely within the chamber 6. Consequently, there are no unused portions of the tether 8 which block or otherwise hamper the insertion of a reinforcing element into the chamber 6 of the air-bag 1 during manufacture.

In a further embodiment, the tether 8 further comprises a fourth portion which is interwoven with at least one warp yarn in a third part of the air-bag 1. A fifth portion of the tether 8 is not interwoven with any warp yarn and extends from the third part of the air-bag 1 to a fourth part of the air-bag 1. The tether 8 further comprises a sixth portion which is interwoven with at least one warp yarn in the fourth part of the air-bag 1.

In addition to "hiding" the unused portions of the tether 8 by interweaving the unused portions with warp yarns of the fabric layers 2, 3, the interweaving modifies the structural or mechanical properties of the layers of fabric 2, 3. Integrating the unused portions of the tether 8 in the fabric layers 2, 3 increases the tear strength of the layers of fabric 2, 3 to between 80 and 300N in one embodiment or to between 300 and 800N in another embodiment and/or the tensile strength of the layers of fabric 2, 3 to between 2200N and 2900N in one embodiment or to between 3000N and 5000N in another embodiment. This increase in the tear and/or tensile strength is an additional benefit over and above the benefit of hiding unused portions of the tether 8 to facilitate the manufacture of the air-bag 1.

In an embodiment of the invention, the integration of the unused portions of the tether in the fabric layers 2, 3 enables the weft sett to be reduced in the parts of the air-bag 1 that comprise the interwoven tether 8. The reduction of the weft sett increases the gas permeability of those parts of the first and second layers of fabric 2, 3 as compared with the remainder of the layers of fabric 2, 3 of the air-bag 1. This increase in the gas permeability is desirable since it helps control the pressure within the air-bag 1 at high stress areas of the fabric of the air-bag 1 which minimises the possibility of the layers of fabric 2, 3 becoming over stressed and rupturing the tether 8 when the air-bag 1 is inflated.

According to the invention, the weft sett of the first and second layers of fabric 2, 3 is a first predetermined amount and the weft sett at the parts of the air-bag 1 where the tether 8 is interwoven with the warp and weft yarns is a second predetermined amount which is lower than the first predetermined amount. In a preferred embodiment, the weft sett of the parts of the air-bag where the tether 8 is interwoven with the first and second layers of fabric 2, 3 is between 12/cm and 20/cm. In a further embodiment, the weft sett is between 20/cm and 26/cm.

In a preferred embodiment, the gas permeability of the layers of fabric 2, 3 of the air-bag 1 where the tether 8 is interwoven with the warp and weft yarns is between 0 and 4 l/dm².

When used in this specification and the claims, the term "comprises" and "comprising" and variations thereof mean that specified features, steps or integers and included. The terms are not to be interpreted to exclude the presence of other features, steps or compounds.

## Claims

1. A vehicle air-bag (1) comprising:
first and second layers of fabric (2, 3) which each comprise a plurality of interwoven warp and weft yarns;
an inlet aperture (4) positioned in at least one of the first and second layers of fabric (2, 3), the inlet aperture (4) being configured to be connected to a source of gas;
a chamber (6) which is at least partly provided between the first and second layers of fabric (2, 3), the chamber (6) being in fluid communication with the inlet aperture (4) and configured to be inflated by gas from the inlet aperture (4); and
an elongate tether (8) comprising:
a first portion (9) which is interwoven with a plurality of warp yarns (10a) in the first layer of fabric (2) to integrate the first portion (9) into a first part (11) of the air-bag (1);
a second portion (12) which is not interwoven with any warp yarns, the second portion (12) of the tether (8) extending from the first part (11) of the air-bag (1) to a second part (14) of the air-bag (1); and
a third portion (13) which is interwoven with a plurality of warp yarns (10b) in the second layer of fabric (3) to integrate the third portion (13) into the second part (14) of the air-bag (1), such that the interweaving of the first and third portions (9, 13) of the tether (8) modifies the structural properties of the first and second parts (11, 14) of the air-bag (1),
wherein the tear strength of at least one of the layers of fabric (2, 3) of the air-bag (1) is a first predetermined tear strength and the tear strength of each of the first and second parts (11, 14) of the air-bag (1) is a second predetermined tear strength which is greater than the first predetermined tear strength, **characterized by** the second predetermined tear strength being between 80N and 300N or between 300N and 800N; and
wherein the weft sett of the first and second layers of fabric (2, 3) is a first predetermined amount and the weft sett at the first and second parts (11, 14) of the air-bag (1) is a second predetermined amount which is lower than the first predetermined amount; and
wherein at least one of the first and second parts (11, 14) of the air-bag (1) is positioned adjacent to the inlet aperture (4).

2. The vehicle air-bag of claim 1, wherein the combined length of the first, second and third portions (9, 12, 13) of the tether (8) is substantially equal to the entire length of the tether (8).

3. The vehicle air-bag of claim 1 or 2, wherein the second predetermined weft sett is between 12/cm and 20/cm.

4. The vehicle air-bag of claim 1, wherein the gas permeability of the first and second parts of the air-bag (1) is between 0 and 4 l/dm².

5. The vehicle air-bag of any one of the preceding claims, wherein the air-bag further comprises:
a reinforcing element which is attached to one of the first and second layers of fabric (2, 3) at or adjacent to the inlet aperture (4).

6. The vehicle air-bag of claim 5, wherein the reinforcing element is a Y-sock.

7. The air-bag of any one of the preceding claims, wherein the tensile strength of at least one of the layers of fabric (2, 3) of the air-bag (1) is a first predetermined tensile strength and the tensile strength of each of the first and second parts (11, 14) of the air-bag (1) is a second predetermined tensile strength which is greater than the first predetermined tensile strength.

8. The vehicle air-bag of any one of the preceding claims, wherein the tether (8) further comprises:
a fourth portion which is interwoven with at least one warp yarn in a third part of the air-bag (1);
a fifth portion which is not interwoven with any warp yarns, the fifth portion of the tether extending from the third part of the air-bag to a fourth part of the air-bag (1); and
a sixth portion which is interwoven with at least one warp yarn in the fourth part of the air-bag (1).

9. The vehicle air-bag of any one of the preceding claims, wherein the air-bag (1) is one of a pedestrian protecting air-bag or a curtain air-bag.

10. A vehicle air-bag module comprising the vehicle air-bag (1) of any one of the preceding claims.

## Patentansprüche

1. Fahrzeugairbag (1), umfassend:
erste und zweite Gewebeschichten (2, 3), die jeweils eine Vielzahl von verwobenen Kett- und Schussfäden umfassen;
eine Einlassöffnung (4), die in der ersten und/oder zweiten Gewebeschicht (2, 3) angeordnet ist, wobei die Einlassöffnung (4) dazu ausgelegt ist, mit einer Gasquelle verbunden zu sein;
eine Kammer (6), die wenigstens teilweise zwischen der ersten und zweiten Gewebeschicht (2, 3) vorgesehen ist, wobei die Kammer (6) mit der Einlassöffnung (4) in Fluidverbindung steht und dazu ausgelegt ist, durch die Einlassöffnung (4) mit Gas gefüllt zu werden; und
ein langgestrecktes Fangband (8), umfassend:
einen ersten Abschnitt (9), der mit einer Vielzahl von Kettfäden (10a) in der ersten Gewebeschicht (2) verwoben ist, um den ersten Abschnitt (9) in einen ersten Teil (11) des Airbags (1) zu integrieren;
einen zweiten Abschnitt (12), der nicht mit Kettfäden verwoben ist, wobei der zweite Abschnitt (12) des Fangbands (8) sich von dem ersten Teil (11) des Airbags (1) zu einem zweiten Teil (14) des Airbags (1) erstreckt; und
einen dritten Abschnitt (13), der mit einer Vielzahl von Kettfäden (10b) in der zweiten Gewebeschicht (3) verwoben ist, um den dritten Abschnitt (13) in den zweiten Teil (14) des Airbags (1) zu integrieren, so dass das Verweben des ersten und des dritten Abschnitts (9, 13) des Fangbands (8) die strukturellen Eigenschaften des ersten und des zweiten Teils (11, 14) des Airbags (1) verändert,
wobei die Reißfestigkeit wenigstens einer der Gewebeschichten (2, 3) des Airbags (1) eine erste vorbestimmte Reißfestigkeit ist und die Reißfestigkeit jeweils des ersten und zweiten Teils (11, 14) des Airbags (1) eine zweite vorbestimmte Reißfestigkeit ist, die größer als die erste vorbestimmte Reißfestigkeit ist,
**dadurch gekennzeichnet, dass** die zweite vorbestimmte Reißfestigkeit zwischen 80 N und 300 N oder zwischen 300 N und 800 N liegt; und
wobei die Schussfadeneinstellung der ersten und zweiten Gewebeschicht (2, 3) ein erster vorbestimmter Betrag ist und die Schussfadeneinstellung an dem ersten und zweiten Teil (11, 14) des Airbags (1) ein zweiter vorbestimmter Betrag ist, der kleiner als der erste vorbestimmte Betrag ist; und
wobei der erste und/oder der zweite Teil (11, 14) des Airbags (1) angrenzend zu der Einlassöffnung (4) angeordnet sind.

2. Fahrzeugairbag nach Anspruch 1, wobei die kombinierte Länge der ersten, zweiten und dritten Abschnitte (9, 12, 13) des Fangbands (8) im Wesentlichen gleich der Gesamtlänge des Fangbands (8) ist.

3. Fahrzeugairbag nach Anspruch 1 oder 2, wobei die zweite vorbestimmte Schussfadeneinstellung zwischen 12 Fd/cm und 20 Fd/cm liegt.

4. Airbag nach Anspruch 1, wobei die Gasdurchlässigkeit des ersten und zweiten Teils des Airbags (1) zwischen 0 und 4 l/dm² liegt.

5. Fahrzeugairbag nach einem der vorhergehenden Ansprüche, wobei der Airbag ferner Folgendes umfasst:
ein Verstärkungselement, das an der ersten oder der zweiten Gewebeschicht (2, 3) an oder angrenzend zu der Einlassöffnung (4) befestigt ist.

6. Fahrzeugairbag nach Anspruch 5, wobei es sich bei dem Verstärkungselement um einen Y-Stutzen handelt.

7. Airbag nach einem der vorhergehenden Ansprüche, wobei die Zugfestigkeit wenigstens einer der Gewebeschichten (2, 3) des Airbags (1) eine erste vorbestimmte Zugfestigkeit ist und die Zugfestigkeit jeweils des ersten und zweiten Teils (11, 14) des Airbags (1) eine zweite vorbestimmte Zugfestigkeit ist, die größer als die erste vorbestimmte Zugfestigkeit ist.

8. Fahrzeugairbag nach einem der vorhergehenden Ansprüche, wobei das Fangband (8) ferner Folgendes umfasst:
einen vierten Abschnitt, der mit wenigstens einem Kettfaden in einem dritten Teil des Airbags (1) verwoben ist;
einen fünften Abschnitt, der nicht mit Kettfäden verwoben ist, wobei der fünfte Abschnitt des Fangbands sich von dem dritten Teil des Airbags zu einem vierten Teil des Airbags (1) erstreckt; und
einen sechsten Abschnitt, der mit wenigstens einem Kettfaden in dem vierten Teil des Airbags (1) verwoben ist.

9. Fahrzeugairbag nach einem der vorhergehenden Ansprüche, wobei der Airbag (1) ein Fußgängerschutzairbag oder ein Vorhangairbag ist.

10. Fahrzeugairbagmodul umfassend den Fahrzeugairbag (1) nach einem der vorhergehenden Ansprüche.

## Revendications

1. Coussin gonflable de sécurité pour véhicule (1) comprenant :
des première et deuxième couches de tissu (2, 3) comprenant chacune une pluralité de fils de chaîne et de trame entrelacés,
une ouverture d'entrée (4) située dans la première et/ou la deuxième couche de tissu (2, 3), l'ouverture d'entrée (4) étant conçue pour être raccordée à une source de gaz,
une chambre (6) prévue au moins en partie entre les première et deuxième couches de tissu (2, 3), la chambre (6) étant en communication fluidique avec l'ouverture d'entrée (4) et étant conçue pour être gonflée par le gaz pénétrant par l'ouverture d'entrée (4), et
une attache allongée (8) comprenant :
une première section (9) qui est entrelacée avec une pluralité de fils de chaîne (10a) de la première couche de tissu (2) pour combiner la première section (9) à une première partie (11) du coussin gonflable de sécurité (1),
une deuxième section (12) qui n'est pas entrelacée avec les fils de chaîne, la deuxième section (12) de l'attache (8) allant de la première partie (11) du coussin gonflable de sécurité (1) jusqu'à une deuxième partie (14) du coussin gonflable de sécurité (1), et
une troisième section (13) qui est entrelacée avec une pluralité de fils de chaîne (10b) de la deuxième couche de tissu (3) pour intégrer la troisième section (13) à la deuxième partie (14) du coussin gonflable de sécurité (1) de telle manière que l'entrelacement de la première et de la troisième section (9, 13) de l'attache (8) modifie les propriétés structurelles des première et deuxième parties (11, 14) du coussin gonflable de sécurité (1) ;
la résistance à la déchirure d'au moins une des couches de tissu (2, 3) du coussin gonflable de sécurité (1) consistant en une première résistance à la déchirure prédéterminée et la résistance à la déchirure de la première et de la deuxième partie (11, 14) du coussin gonflable de sécurité (1) consistant en une deuxième résistance à la déchirure prédéterminée qui est supérieure à la première résistance à la déchirure prédéterminée,
**caractérisé en ce que** la deuxième résistance à la déchirure prédéterminée est située entre 80 N et 300 N, ou entre 300 N et 800 N ;
le compte de fils en trame des première et deuxième couches de tissu (2, 3) consistant en une première densité prédéterminée et le compte de fils en trame au niveau des première et deuxième parties (11, 14) du coussin gonflable de sécurité (1) consistant en une deuxième densité prédéterminée qui est inférieure à la première densité prédéterminée, et
la première et/ou la deuxième partie (11, 14) du coussin gonflable de sécurité (1) étant située à proximité de l'ouverture d'entrée (4).

2. Coussin gonflable de sécurité pour véhicule selon la revendication 1, dans lequel la longueur combinée des première, deuxième et troisième sections (9, 12, 13) de l'attache (8) est sensiblement égale à la longueur totale de l'attache (8).

3. Coussin gonflable de sécurité pour véhicule selon la revendication 1 ou 2, dans lequel le deuxième compte de fils en trame prédéterminé est compris entre 12/cm et 20/cm.

4. Coussin gonflable de sécurité pour véhicule selon la revendication 1, dans lequel la perméabilité aux gaz des première et deuxième parties du coussin gonflable de sécurité (1) est comprise entre 0 et 4 L/dm².

5. Coussin gonflable de sécurité pour véhicule selon l'une quelconque des revendications précédentes, comprenant en outre :
un élément de renfort qui est fixé à la première ou à la deuxième couche de tissu (2, 3) au niveau de l'ouverture d'entrée (4) ou à proximité de celle-ci.

6. Coussin gonflable de sécurité pour véhicule selon la revendication 5, dans lequel l'élément de renfort est un séparateur en Y.

7. Coussin gonflable de sécurité selon l'une quelconque des revendications précédentes, dans lequel la résistance à la traction d'au moins une des couches de tissu (2, 3) du coussin gonflable de sécurité (1) consiste en une première résistance à la traction prédéterminée et la résistance à la traction de la première et de la deuxième partie (11, 14) du coussin gonflable de sécurité (1) consiste en une deuxième résistance à la traction prédéterminée qui est supérieure à la première résistance à la traction prédéterminée.

8. Coussin gonflable de sécurité pour véhicule selon l'une quelconque des revendications précédentes, dans lequel l'attache (8) comprend en outre :
une quatrième section qui est entrelacée avec au moins un fil de chaîne d'une troisième partie du coussin gonflable de sécurité (1),
une cinquième section qui n'est pas entrelacée avec les fils de chaîne, la cinquième section de l'attache allant de la troisième partie du coussin gonflable de sécurité jusqu'à une quatrième partie du coussin gonflable de sécurité (1), et
une sixième section qui est entrelacée avec au moins un fil de chaîne de la quatrième partie du coussin gonflable de sécurité (1).

9. Coussin gonflable de sécurité pour véhicule selon l'une quelconque des revendications précédentes, ledit coussin gonflable de sécurité (1) consistant en un coussin gonflable visant à la protection des piétons ou un coussin gonflable rideau.

10. Module de coussin gonflable de sécurité pour véhicule comprenant le coussin gonflable de sécurité pour véhicule (1) selon l'une quelconque des revendications précédentes.
